# EUROPEAN PATENT SPECIFICATION

(11) **EP 3 078 933 B1**
(45) Date of publication and mention of the grant of the patent: **27.02.2019**
(21) Application number: 14866869.2
(22) Date of filing: 27.11.2014
(51) Int. Cl.: G01B 21/22, B60R 16/02, B62D 15/02, B60Q 1/14

(54) **OPERATION UNIT**
BETRIEBSEINHEIT
UNITÉ OPÉRATIONNELLE

(30) Priority: 05.12.2013 JP 2013252431
(43) Date of publication of application: 12.10.2016
(73) Proprietor: Kabushiki Kaisha Tokai-Rika-Denki-Seisakusho, Niwa-gun, Aichi 480-0195 (JP)
(72) Inventor: ANDO, Shinji, Niwa-gun Aichi 480-0195 (JP)
(74) Representative: TBK
(86) International application number: PCT/JP2014/081424
(87) International publication number: WO 2015/083617

(56) References cited:
- EP-A2- 1 594 723
- DE-C1- 19 649 857
- JP-A- H10 236 319
- JP-A- 2003 531 762
- JP-A- 2010 112 848
- US-A1- 2001 007 402
- US-A1- 2005 269 192
- US-A1- 2008 278 150

## Description

### TECHNICAL FIELD

The present invention relates to an operation unit capable of detecting operation of a plurality of operation systems.

### BACKGROUND ART

In the prior art (refer to, for example, patent document 1), a vehicle is provided with an angle detection element (steering angle sensor or the like) to detect the rotated amount of a steering shaft (steering wheel). In patent document 1, the steering shaft extends through a board (control board) on which the angle detection element is mounted. More specifically, a hole extends through the board on which the angle detection element is mounted, and the steering shaft is inserted through the hole to be rotatable relative to the board. The board includes a connector that is connected to a lever unit (lever combination switch unit).

Patent Document 2 discloses the preamble of claim 1 and shows a combination switch module which includes a steering angle sensor in which a steering angle CPU portion for performing angle calculation according to an output of a sensing circuit portion, a steering multiplex communication portion for performing multiplex communication of steering information with an external system, and a steering angle data storage portion for storing data when no power is supplied thereto are formed in a multiplex communication control unit, a multiplex communication portion and a data storage portion on an ECU board, respectively.

Patent Document 3 discloses a function module having a common housing containing a number of basic function units and satellite function units for operating the various respective controls, and which is secured to the outer wall of the steering column by a carrier. The latter has a distribution device extending perpendicular to the steering column, to which the function units are connected on the side facing the steering wheel, via plug-in connections. The distribution device has a single plug-in connector on the opposite side for connection to the motor vehicle on-board voltage supply system.

### PRIOR ART DOCUMENT

### PATENT DOCUMENT

Patent Document 1: JP 2004-262270 A
Patent Document 2: EP 1 594 723 A2
Patent Document 3: DE 196 49 857 C1

### SUMMARY OF THE INVENTION

### PROBLEM TO BE SOLVED BY THE INVENTION

When the board becomes defective, the board needs to be replaced by a new one. In the case of patent document 1, to replace the board, for example, the steering wheel is removed, a module (e.g., housing) of a lever combination switch is removed, and then the lever unit is removed.

In this manner, a number of components need to be removed before removing the board. Thus, the replacement of the board is a burdensome task.

It is an object of the present invention to provide an operation unit that improves the efficiency for replacing a board.

### MEANS FOR SOLVING THE PROBLEM

One aspect of the present invention is an operation unit according to claim 1 that can be coupled to a steering shaft of a vehicle. The operation unit includes a body and a lever unit coupled in a removable manner to the body. The lever unit is configured to be operable and includes a first connector. The operation unit further includes a board. A second connector is arranged on the board and electrically connected to the first connector of the lever unit, and a controller is arranged on the board and configured to detect an operation amount of the lever unit. The body is configured so that a first coupling direction of the lever unit to the body is the same as an insertion direction of the first connector of the lever unit into the second connector on the board, and a second coupling direction of the board to the body is opposite to the first coupling direction and the insertion direction.

In the above structure, preferably, coupling of the lever unit to the body and connection of the first connector to the second connector are performed at the same time.

In the above structure, preferably, the board is arranged parallel to an axis of the steering shaft.

The above structure, preferably, further includes a main gear fixed to the steering shaft and rotated synchronously with the steering shaft, one or more sub-gears rotated in engagement with the main gear, an angle detection element mounted on the board to detects rotation of the one or more sub-gears.

In the above structure, preferably, the main gear is arranged to intersect an axis of the steering shaft, and the one or more sub-gears and the angle detection element are arranged parallel to the axis of the steering shaft.

In the above structure, preferably, the lever unit is one of two lever units, and the two lever units are arranged on opposite sides of the steering shaft.

In the above structure, preferably, the body includes a through hole that receives the steering shaft, and the board is coupled to the body separated from the through hole.

In the above structure, preferably, the board is coupled to the body and includes a first coupling surface on which the second connector is mounted.

In the above structure, preferably, the board includes a second coupling surface, which is opposite to the first coupling surface, and an external connection terminal, which is mounted on the second coupling surface.

### EFFECT OF THE INVENTION

The present invention improves the efficiency for replacing a board in an operation unit.

### BRIEF DESCRIPTION OF THE DRAWINGS

Fig. 1 is a perspective view showing one embodiment of an operation unit.
Fig. 2 is a schematic diagram of the operation unit as viewed from the front.
Fig. 3 is a schematic diagram of the operation unit as viewed from the side.
Fig. 4 is an exploded perspective view of the operation unit.
Fig. 5 is an explanatory view showing how to couple the components of the operation unit.
Fig. 6 is an explanatory view showing how to remove the components of the operation unit.

### EMBODIMENTS OF THE INVENTION

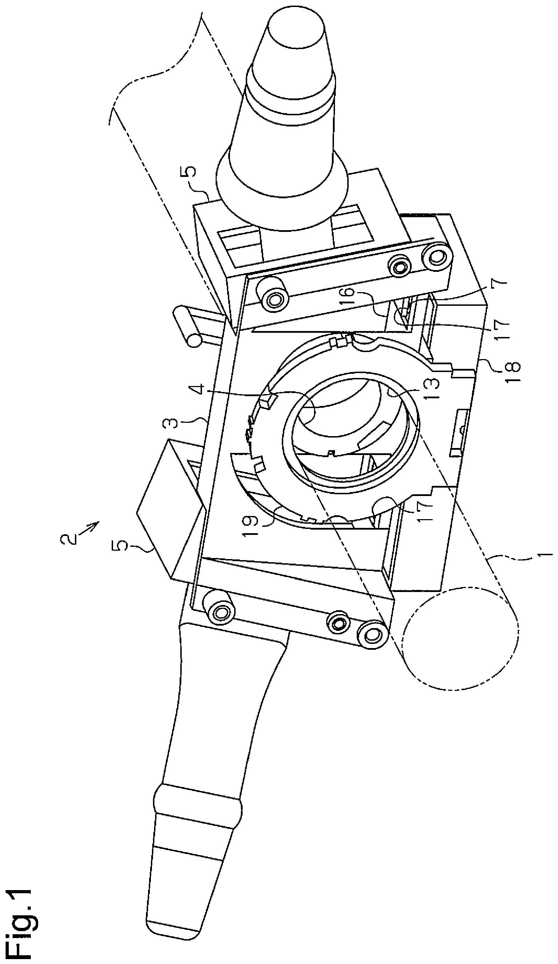

One embodiment of an operation unit will now be described with reference to Figs. 1 to 6.

As shown in Fig. 1, an operation unit 2 is coupled to a steering shaft 1 of a vehicle. The operation unit 2 is configured to be capable of detecting operation of a plurality of operation systems in the vehicle. The operation unit 2 includes a body 3 that serves as a main body. The steering shaft 1 is inserted through the body 3 and rotatable relative to the body 3. For example, a slide hole 4 extends through a central portion of the body 3, and the steering shaft 1 is supported to be rotatable in the slide hole 4.

The operation unit 2 includes a lever unit 5 that is operated by a user. The lever unit 5 is coupled to the body 3 in a removable manner. The lever unit 5 is preferably used with, for example, a lever combination switch. For example, two lever units 5 are arranged on opposite sides of the steering shaft 1. Each lever unit 5 includes an internal switch or sensor that detects a lever operation and outputs a corresponding lever operation signal.

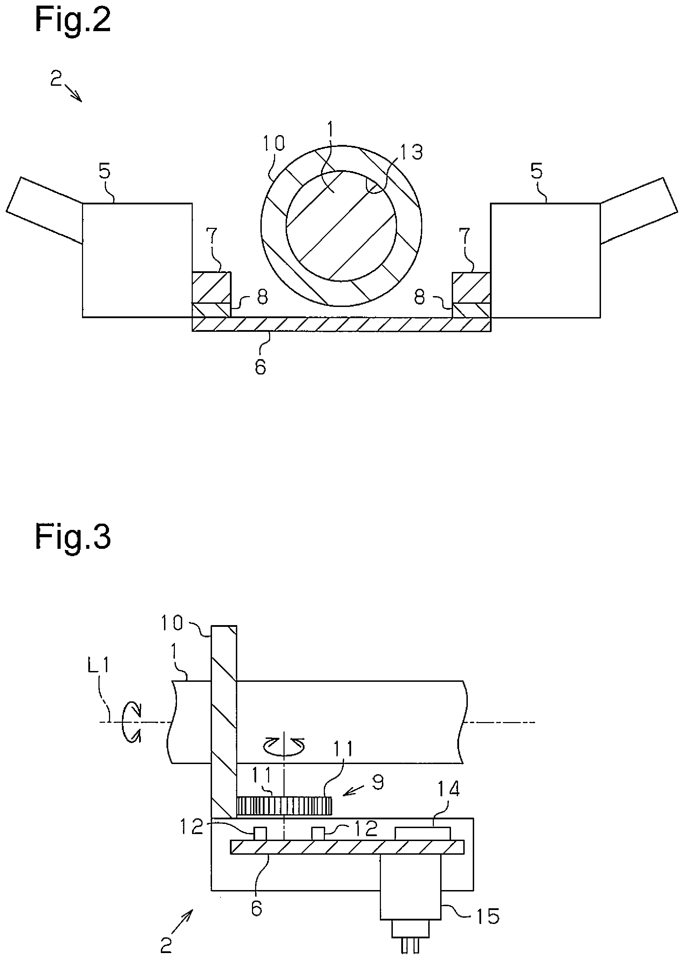

As shown in Fig. 2, the operation unit 2 includes a board 6 (control board) on which various electronic components related to the operation unit 2 are mounted. The two lever units 5 each include a connector 7. Two connectors 8, which are mounted on the board 6, are electrically connected to the two connectors 7, respectively. The surface of each connector 7 opposed to the board 6, that is, the lower surface of the connector 7 as viewed in Fig. 2 defines a connector joining surface. The surface of each connector 8 opposite to the board 6, that is, the upper surface of the connector 8 as viewed in Fig. 2 defines a connector joining surface. For example, each connector 8 is arranged on an end of the board 6. The board 6, which is coupled to the body 3, includes a first coupling surface on which the connectors 8 are mounted, a second coupling surface opposite to the first coupling surface, and an external connection terminal 15 mounted on the second coupling surface. In the embodiment, the number of the connectors 8 is in conformance with the number of the lever units 5. However, there is no limit to the number of the connectors 8.

As shown in Fig. 3, the operation unit 2 preferably includes a steering angle sensor 9 that detects rotation of the steering shaft 1 and is arranged integrally with the operation unit 2. More specifically, the operation unit 2 includes a main gear 10, which is fixed to the steering shaft 1 and rotated synchronously with the steering shaft 1, one or more (two in the present example) sub-gears 11, which are engaged with the main gear 10, and one or more (two in the present example) angle detection elements 12, which are mounted on the board 6 to detect rotation of the sub-gears 11. The rotation of the steering shaft 1 (for example, rotation amount or rotation direction) and the operation of the lever units 5 are both detectable by the operation unit 2.

For example, insertion of the steering shaft 1 through a central insertion hole 13 arranges the main gear 10 so as to intersect the axis L1 of the steering shaft 1. The main gear 10 rotates integrally with the steering shaft 1 about the axis L1. Preferably, the two sub-gears 11 are arranged so that the axis of each sub-gear 11 is orthogonal to the axis L1 of the steering shaft 1. That is, preferably, the main gear 10 and the two sub-gears 11 lie along different planes and are arranged so that the angle of the main gear 10 relative to the two sub-gears 11 is 90 degrees.

Preferably, the board 6 is arranged parallel to the axis L1 of the steering shaft 1. For example, the body 3 includes the slide hole 4 (through hole) through which the steering shaft 1 is inserted. The board 6 is coupled to the body 3 separated from the through hole. The two angle detection elements 12, which are mounted on the board 6, may be arranged parallel to the axis L1 of the steering shaft 1. Each angle detection element 12 is arranged opposing the corresponding sub-gear 11. In the embodiment, the number of the angle detection elements 12 is in conformance with the number of the sub-gears 11. However, the number of the angle detection elements 12 is not limited. The angle detection elements 12 may be, for example, magnetic sensors such as MRE sensors.

A controller 14 that controls the operation unit 2 is mounted on the board 6. The controller 14 is, for example, a central processing unit (CPU) or the like. The controller 14 receives an operation signal from each lever unit 5 and detects the operation state of the lever unit 5. The controller 14 detects the rotation amount (rotation position) of the steering shaft 1 based on the detection signal provided from each angle detection element 12. The external connection terminal 15 arranged on the rear surface of the board 6 is electrically connected to another in-vehicle device. The controller 14 outputs switch information detected from the lever units 5 and steering angle information of the steering shaft 1 to another in-vehicle device through the external connection terminal 15.

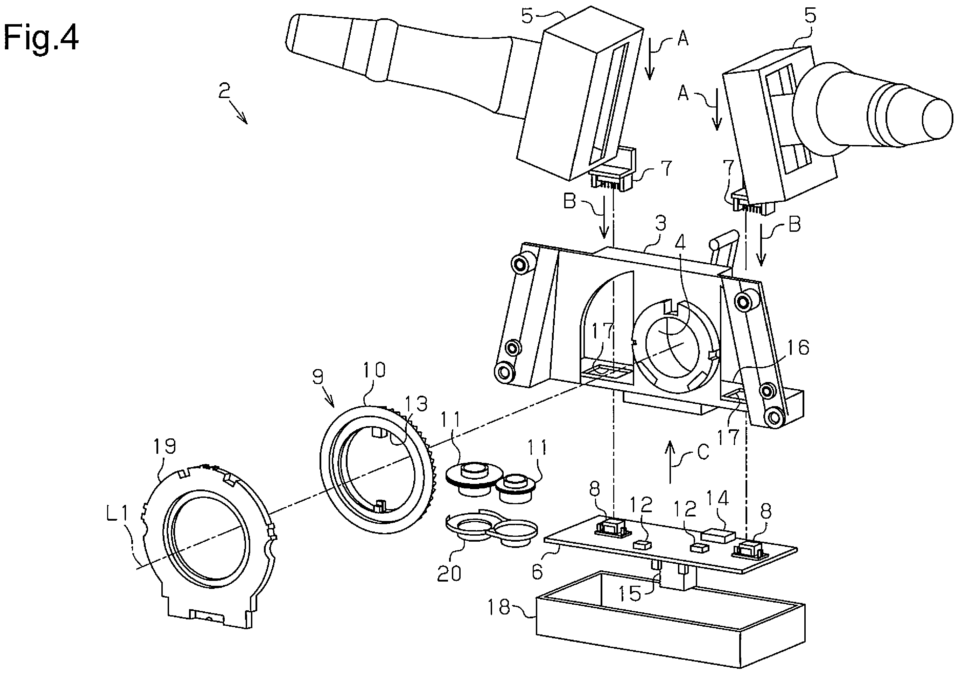

As shown in Fig. 4, the back surface of the body 3 preferably includes a seat 16 that extends along the axis L1 of steering shaft 1. The seat 16 may include two insertion holes 17. Each insertion hole 17 receives the connector 7 of the corresponding lever unit 5, which is coupled to the body 3. In the embodiment, the number of the insertion holes 17 is in conformance with the number of lever units 5. However, the number of insertion holes 17 is not limited.

The operation unit 2 is configured so that the coupling direction in which the lever units 5 are coupled to the body 3 of the lever unit 5 (direction of arrows A in Fig. 4) is the same as the insertion direction in which the connectors 7 of the lever unit 5 are coupled to the connectors 8 of the board 6 (direction of arrows B in Fig. 4). Further, the operation unit 2 is configured so that the coupling direction in which the board 6 is coupled to the body 3 (direction of arrow C in Fig. 4) is opposite to the coupling direction of the lever unit 5 (direction of arrows A in Fig. 4) and the insertion direction of the connectors 7 (direction of arrows B in Fig. 4). In other words, the operation unit 2 is configured so that a first coupling direction of the lever units 5 to the body 3 is the same as the insertion direction of the connectors 7 of the lever unit 5 into the connectors 8 on the board 6 and so that a second coupling direction of the board 6 to the body 3 is opposite to the first coupling direction and the insertion direction. Further, in the operation unit 2, it is preferred that the coupling of the lever units 5 to the body 3 be performed at the same time as the connection of the two connectors 7 to the two connectors 8.

The board 6 may be encased in, for example, a box-shaped case 18. The main gear 10 may be encased in, for example, a cover 19. The sub-gears 11 may be movably encased in a gear holder 20.

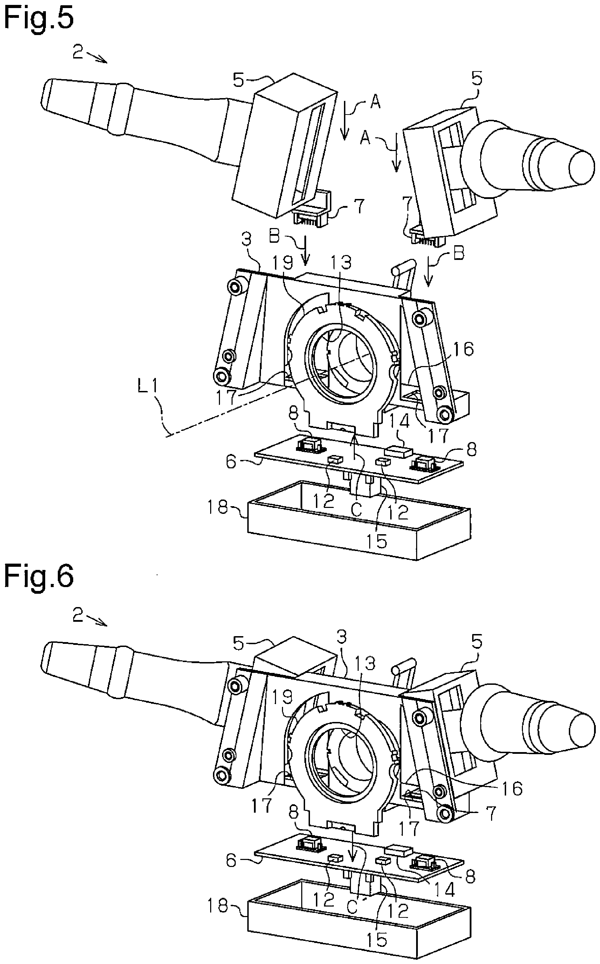

The operation of the operation unit 2 will now be described with reference to Figs. 5 and 6.

As shown in Fig. 5, the board 6 is coupled to the body 3 in the coupling direction C, which is opposite to the coupling direction A of the lever units 5 (insertion direction B of connectors 7 and 8). The structure for coupling the board 6 to the body 3 may be of any of a variety of coupling structures such as a snap-fit structure or a screw-fastening structure. In any case, the board 6 may be coupled to the body 3 of the operation unit 2 from beside the steering shaft 1.

Each lever unit 5 is fitted to the body 3 in the coupling direction A in a direction generally orthogonal to the axis L1 of the steering shaft 1 to couple the lever unit 5 to the body 3. In this case, when the two lever units 5 are coupled to the body 3, the connection of the two connectors 7 to the two connectors 8 is also performed. Thus, the coupling of the lever units 5 and the connection of the connectors 7 and 8 are performed at the same time.

Referring to Fig. 6, for example, when the board 6 becomes defective, the board 6 is replaced. In such a case, the case 18 is pulled in a direction that is opposite to the coupling direction C (direction of arrow C' in Fig. 6) and removed from the body 3. The board 6 is also pulled in the direction of arrow C' and removed from the body 3. A new board 6 is prepared and coupled to the body 3 from beside the steering shaft 1. In this manner, when replacing the board 6, there is no need to remove the steering wheel or the lever units 5. This facilitates the replacement of the board 6.

The present embodiment has the advantages described below.
(1) The coupling direction A of the lever unit 5 to the body 3 is the same as the insertion direction B of the connectors 7 of the lever units 5 and opposite to the coupling direction of the board 6 to the body 3. As a result, for example, the board 6 may be solely removed from the body 3 while the lever units 5 remain coupled to the body 3. That is, when replacing the board 6 due to a defect or the like, the board 6 may be replaced without removing the lever units 5 or the like from the body 3. This improves the efficiency of board replacement.
(2) The improvement in the efficiency of board replacement lowers the replacement costs.
(3) At the same time as when the lever unit 5 is coupled to the body 3, the connectors 7 of the lever units 5 are connected to the connectors 8 of the board 6. By coupling the lever units 5 to the body 3, the connectors 7 of the lever units 5 are simultaneously connected. This improves the coupling efficiency of the lever units 5.
(4) In the operation unit 2, the steering angle sensor 9, which detects the rotation of the steering shaft 1, is integrated with the body 3, which is provided with functions for detecting the operation of the lever units 5. This allows the operation of the lever units 5 and the rotation of the steering shaft 1 to be detected with the single operation unit 2 and reduces the number of components around the steering shaft 1.
(5) The board 6 is arranged parallel to the axis L1 of the steering shaft 1. This allows the board 6 to be arranged, for example, beside the steering shaft 1. Thus, the board 6 does not have to be shaped so as to allow the steering shaft 1 to extend through the board 6. As a result, the board 6 may have a simple shape and the yield may be improved. Further, the board 6 can be replaced from beside the steering shaft 1. This further improves the board replacement efficiency.
(6) The main gear 10 is arranged in a direction intersecting the axis L1 of the steering shaft 1. The sub-gears 11 and the angle detection elements 12 are arranged in a direction parallel to the axis L1 of the steering shaft 1. The main gear 10 and the sub-gears 11 do not have to be arranged together in the radial direction of the operation unit 2 (steering shaft 1). This allows the operation unit 2 to be reduced in size in the radial direction.
(7) The two lever units 5 are respectively arranged at opposite sides of the body 3. In this manner, even when the two lever units 5 are located at two sides of the body 3, the coupling of each lever unit 5 is easy and not burdensome.

The embodiment is not limited to the structure described above and may be modified as described below.

The operation of the lever units 5 may be detected by, for example, a switch or a sensor arranged in the body 3.

The coupling of the lever units 5 and the connection of the connectors 7 do not have to be performed at the same time and may be performed separately.

The lever units 5 may be used to operate a variety of devices such as blinkers, windshield wipers, headlights, and a cruise control system. In this manner, the operation function assigned to the lever units 5 may be used to operate any device related with vehicle driving.

The coupling of the lever units 5 to the body 3 may be performed through any of a variety of coupling methods such as snap-fitting or screw-fastening. The structure of such coupling portions may be changed in any manner.

The lever units 5 may have any shape or structure.

The lever units 5 do not have to be connected to the steering shaft 1 from above and may be connected in any direction such as a sideward direction.

The coupling direction A of the lever unit 5 is not limited to the direction that is generally orthogonal to the axis L1 of the steering shaft 1 and may be changed to another direction. The insertion direction B of the connectors 7 of the lever units 5 and the coupling direction C of the board 6 may also be changed to any direction.

The lever unit 5 may be arranged on only one side of the body 3.

The coupling of the board 6 to the body 3 may be performed through any of a variety of coupling methods such as a snap-fitting or screw-fastening.

The board 6 does not have to be arranged parallel to the axis L1 of the steering shaft 1 and may be arranged in another direction.

The lever units 5 and the steering angle sensor 9 may be provided with separate controllers 14.

The steering angle sensor 9 may be a sensor formed by, for example, only the main gear 10.

The angle detection elements 12 may be changed to other sensors such as optical sensors.

The operation unit 2 may be separate from the steering angle sensor 9.

The operation unit 2 may be applied to any device or apparatus that includes the steering shaft 1.

## Claims

1. An operation unit (2) that can be coupled to a steering shaft (1) of a vehicle, the operation unit (2) comprising:
a body (3);
a lever unit (5) coupled in a removable manner to the body (3), wherein the lever unit (5) is configured to be operable and includes a first connector (7); and
a board (6), wherein a second connector (8) is arranged on the board (6) and electrically connected to the first connector (7) of the lever unit (5), and a controller is arranged on the board (6) and configured to detect an operation amount of the lever unit (5);
wherein the operation unit (2) is configured so that a first coupling direction of the lever unit (5) to the body is the same as an insertion direction of the first connector (7) of the lever unit (5) into the second connector (8) on the board (6), and
wherein the operation unit (2) further comprises:
a main gear (10) fixed to the steering shaft (1) and rotated synchronously with the steering shaft (1);
one or more sub-gears (11) rotated in engagement with the main gear (10); and
an angle detection element (12) mounted on the board (6), wherein the angle detection element (12) detects rotation of the one or more sub-gears (11),
**characterized in that**
a second coupling direction of the board (6) to the body is opposite to the first coupling direction and the insertion direction, and the first coupling direction and the second coupling direction intersect an axis (L1) of the steering shaft (1).

2. The operation unit (2) according to claim 1, wherein the operation unit (2) is configured so that coupling of the lever unit (5) to the body and connection of the first connector (7) to the second connector (8) are performed at the same time.

3. The operation unit (2) according to claim 1 or 2, wherein the board (6) is arranged parallel to an axis (L1) of the steering shaft (1).

4. The operation unit (2) according to claim 1, wherein
the main gear (10) is arranged to intersect an axis (L1) of the steering shaft (1), and
the one or more sub-gears (11) and the angle detection element (12) are arranged parallel to the axis (L1) of the steering shaft (1).

5. The operation unit (2) according to any one of claims 1 to 4, wherein
the lever unit (5) is one of two lever units (5), and
the two lever units (5) are arranged on opposite sides of the steering shaft (1).

6. The operation unit (2) according to any one of claims 1 to 5, wherein
the body (3) includes a through hole (4) that receives the steering shaft (1), and
the board (6) is coupled to the body (3) separated from the through hole (4).

7. The operation unit (2) according to any one of claims 1 to 6, wherein the board (6) is coupled to the body and includes a first coupling surface on which the second connector (8) is mounted.

8. The operation unit (2) according to claim 7, wherein the board (6) includes a second coupling surface, which is opposite to the first coupling surface, and an external connection terminal (15), which is mounted on the second coupling surface.

## Patentansprüche

1. Betätigungseinheit (2), die mit einer Lenkwelle (1) eines Fahrzeugs gekoppelt werden kann, wobei die Betätigungseinheit (2) umfasst:
einen Körper (3);
eine Hebeleinheit (5), die abnehmbar mit dem Körper (3) gekoppelt ist, wobei die Hebeleinheit (5) so konfiguriert ist, dass sie betriebsbereit ist und einen ersten Stecker (7) beinhaltet; und
eine Platine (6), wobei ein zweiter Stecker (8) auf der Platine (6) angeordnet und elektrisch mit dem ersten Stecker (7) der Hebeleinheit (5) verbunden ist, und eine Steuerung auf der Platine (6) angeordnet und konfiguriert ist, um einen Betriebsbetrag der Hebeleinheit (5) zu erfassen;
wobei die Betätigungseinheit (2) so konfiguriert ist, dass eine erste Koppelrichtung der Hebeleinheit (5) an den Körper gleich einer Einsetzrichtung des ersten Steckers (7) der Hebeleinheit (5) in den zweiten Stecker (8) auf der Karte (6) ist, und
wobei die Betriebseinheit (2) ferner umfasst:
ein Hauptzahnrad (10), das an der Lenkwelle (1) befestigt und synchron mit der Lenkwelle (1) gedreht ist;
ein oder mehrere Unterzahnräder (11), die in Eingriff mit dem Hauptzahnrad (10) gedreht werden; und
ein Winkelerfassungselement (12), das auf der Platine (6) montiert ist, wobei das Winkelerfassungselement (12) die Drehung des einen oder der mehreren Unterzahnräder (11) erfasst,
**dadurch gekennzeichnet, dass**
eine zweite Koppelrichtung der Platte (6) an den Körper entgegengesetzt zur ersten Koppelrichtung und der Einsetzrichtung ist, und die erste Koppelrichtung und die zweite Koppelrichtung eine Achse (L1) der Lenkwelle (1) schneiden.

2. Bedieneinheit (2) nach Anspruch 1, wobei die Bedieneinheit (2) so konfiguriert ist, dass die Kopplung der Hebeleinheit (5) an den Körper und die Verbindung des ersten Steckers (7) mit dem zweiten Stecker (8) gleichzeitig durchgeführt werden.

3. Bedieneinheit (2) nach Anspruch 1 oder 2, wobei die Platte (6) parallel zu einer Achse (L1) der Lenkwelle (1) angeordnet ist.

4. Die Bedieneinheit (2) nach Anspruch 1, wobei
das Hauptzahnrad (10) angeordnet ist, um eine Achse (L1) der Lenkwelle (1) zu schneiden, und
das eine oder die mehreren Unterzahnräder (11) und das Winkelerfassungselement (12) parallel zur Achse (L1) der Lenkwelle (1) angeordnet sind.

5. Die Betriebseinheit (2) nach einem der Ansprüche 1 bis 4, worin
die Hebeleinheit (5) eine von zwei Hebeleinheiten (5) ist, und
die beiden Hebelvorrichtungen (5) auf gegenüberliegenden Seiten der Lenkwelle (1) angeordnet sind.

6. Die Betriebseinheit (2) nach einem der Ansprüche 1 bis 5, worin
der Körper (3) ein Durchgangsloch (4) aufweist, das die Lenkwelle (1) aufnimmt, und
die Platte (6) mit dem Körper (3) gekoppelt ist, der von dem Durchgangsloch (4) getrennt ist.

7. Bedieneinheit (2) nach einem der Ansprüche 1 bis 6, wobei die Platine (6) mit dem Körper gekoppelt ist und eine erste Kopplungsfläche aufweist, an der der zweite Stecker (8) montiert ist.

8. Bedieneinheit (2) nach Anspruch 7, wobei die Platine (6) eine zweite Kopplungsfläche, die der ersten Kopplungsfläche gegenüberliegt, und eine externe Verbindungsklemme (15), die an der zweiten Kopplungsfläche montiert ist, beinhaltet.

## Revendications

1. Unité opérationnelle (2) qui peut être couplée à un arbre de direction (1) d'un véhicule, l'unité opérationnelle (2) comprenant :
un corps (3) ;
une unité de levier (5) couplée d'une manière amovible au corps (3), dans laquelle l'unité de levier (5) est configurée pour être opérationnelle et inclut un premier connecteur (7) ; et
un panneau (6), dans laquelle un second connecteur (8) est agencé sur le panneau (6) et électriquement connecté au premier connecteur (7) de l'unité de levier (5), et un dispositif de commande est agencé sur le panneau (6) et configuré pour détecter une quantité d'opération de l'unité de levier (5) ;
dans laquelle l'unité opérationnelle (2) est configurée de sorte qu'une première direction de couplage de l'unité de levier (5) au corps est la même qu'une direction d'insertion du premier connecteur (7) de l'unité de levier (5) dans le second connecteur (8) sur le panneau (6), et
dans laquelle l'unité opérationnelle (2) comprend en outre :
un pignon principal (10) fixé à l'arbre de direction (1) et mis en rotation de manière synchrone avec l'arbre de direction (1) ;
un ou plusieurs sous-pignons (11) mis en rotation en prise avec le pignon principal (10) ; et
un élément de détection d'angle (12) monté sur le panneau (6), dans laquelle l'élément de détection d'angle (12) détecte la rotation des un ou plusieurs sous-pignons (11),
**caractérisée en ce que**
une seconde direction de couplage du panneau (6) au corps est opposée à la première direction de couplage et à la direction d'insertion, et la première direction de couplage et la seconde direction de couplage coupent un axe (L1) de l'arbre de direction (1).

2. Unité opérationnelle (2) selon la revendication 1, dans laquelle l'unité opérationnelle (2) est configurée de sorte que le couplage de l'unité de levier (5) au corps et la connexion du premier connecteur (7) au second connecteur (8) sont réalisés en même temps.

3. Unité opérationnelle (2) selon la revendication 1 ou 2, dans laquelle le panneau (6) est agencé parallèlement à un axe (L1) de l'arbre de direction (1).

4. Unité opérationnelle (2) selon la revendication 1, dans laquelle
le pignon principal (10) est agencé pour couper un axe (L1) de l'arbre de direction (1), et
les un ou plusieurs sous-pignons (11) et l'élément de détection d'angle (12) sont agencés parallèlement à l'axe (L1) de l'arbre de direction (1).

5. Unité opérationnelle (2) selon l'une quelconque des revendications 1 à 4, dans laquelle
l'unité de levier (5) est l'une de deux unités de levier (5), et
les deux unités de levier (5) sont agencées sur des côtés opposés de l'arbre de direction (1).

6. Unité opérationnelle (2) selon l'une quelconque des revendications 1 à 5, dans laquelle
le corps (3) inclut un trou débouchant (4) qui reçoit l'arbre de direction (1), et
le panneau (6) est couplé au corps (3) séparé du trou débouchant (4).

7. Unité opérationnelle (2) selon l'une quelconque des revendications 1 à 6, dans laquelle le panneau (6) est couplé au corps et inclut une première surface de couplage sur laquelle le second connecteur (8) est monté.

8. Unité opérationnelle (2) selon la revendication 7, dans laquelle le panneau (6) inclut une seconde surface de couplage, qui est opposée à la première surface de couplage, et une borne de connexion externe (15), qui est montée sur la seconde surface de couplage.
